# EUROPÄISCHE PATENTANMELDUNG

(11) **EP 1 867 934 A1**
(43) Veröffentlichungstag der Anmeldung: **19.12.2007**
(21) Anmeldenummer: 07109606.9
(22) Anmeldetag: 05.06.2007
(51) Int. Cl.: F24J 2/48, G02B 1/10

(54) **Witterungsbeständiges Verbundmaterial**

(30) Priorität: 13.06.2006 DE 202006009369 U
(71) Anmelder: Alanod Aluminium-Veredlung GmbH & Co. KG, 58240 Ennepetal (DE)
(72) Erfinder: Reichert, Werner, 42287, Wuppertal (DE); Gänz, Klaus, 42389, Wuppertal (DE)
(74) Vertreter: Patentanwälte Dr. Solf & Zapf

(57) **Zusammenfassung**

Die vorliegende Erfindung betrifft ein Verbundmaterial, insbesondere für ein Solarkollektorelement, mit einem bandförmigen metallischen Träger (1), einer Zwischenschicht (2) und mit einem auf die Zwischenschicht (2) aufgebrachten optischen Mehrschichtsystem (3), welches eine metallische Infrarot-Reflektionsschicht (4) und ein darüber liegendes Absorptions-Schichtsystem (5) umfasst. Die Zwischenschicht (2) ist zur elektrochemisch isolierenden Trennung des Trägers (1) von dem optischen Mehrschichtsystem (3) ohne durchgängige Poren ausgebildet und umfasst mindestens eine aus einem Kunststoff bestehende Teilschicht (9), wobei eine im Frequenzbereich von 1 bis 10 Hz an dem Verbund aus Träger (1) und Schichten (2, 3) gemessene Impedanz einen Wert besitzt, der größer ist als 1 MΩ.

## Beschreibung

Die vorliegende Erfindung betrifft ein Verbundmaterial, insbesondere für ein Solarkollektorelement, mit einem bandförmigen metallischen Träger, einer Zwischenschicht und mit einem auf die Zwischenschicht aufgebrachten optischen Mehrschichtsystem, welches eine Infrarot-Reflektionsschicht und ein darüber liegendes Absorptions-Schichtsystem umfasst.

Solarkollektoren werden bekanntermaßen zur Energiegewinnung aus der Sonnenstrahlung eingesetzt. Dabei wird die Sonnenstrahlung an einem beispielsweise plattenförmigen Absorberteil eines Solarkollektors in Wärme umgewandelt und erhitzt eine im Kollektor enthaltene Wärmeträgerflüssigkeit. Für die Wärmeträgerflüssigkeit ist ein aus Rohren bestehendes Kreislaufsystem vorhanden, das es ermöglicht, die aufgenommene Wärme wieder an einen Verbraucher, wie z. B. an einen Wärmetauscher, in dem Brauchwasser erwärmt werden kann, abzugeben.

Bei Solarkollektoren unterscheidet man Niedrigtemperatur-Kollektoren mit Betriebstemperaturen bis zu 100 °C und Hochtemperatur-Kollektoren mit Betriebstemperaturen über 100 °C, wobei im Falle von sogenannten Tower-Anlagen, die zur Bereitstellung von Prozesswärme dienen, die Absorbertemperatur bis zu 1200 °C betragen kann. Als charakteristische Größe für einen Solarkollektor wird häufig die sogenannte Stillstandstemperatur angegeben, worunter die maximale, theoretisch mögliche Einsatztemperatur eines Kollektors zu verstehen ist, bei der das Material im thermischen Gleichgewicht mit der Umgebung steht.

Die Eigenschaften "solarer Absorptionsgrad", im Folgenden kurz "Absorption" genannt, und "thermischer Emissionsgrad", im Folgenden kurz "Emission" genannt, werden durch das Mehrschichtsystem, insbesondere durch dessen Infrarot-Reflektionsschicht und durch das darüber liegende Absorptions-Schichtsystem entscheidend beeinflusst. Weitere wichtige funktionelle Eigenschaften, wie Temperaturstabilität, Verarbeitbarkeit, Recyclierbarkeit usw., sind durch den kompletten Aufbau des Verbundmaterials bestimmt.

Allgemein teilt sich bei einem Objekt, auf das eine Strahlung auftrifft, wie dies auch bei der beschichteten Oberfläche eines Absorberteils geschieht, diese Strahlung in einen reflektierten, einen absorbierten und einen transmittierten Anteil auf, die durch den Reflexionsgrad (Reflexionsvermögen), den Absorptionsgrad (Absorptionsvermögen) und den Transmissionsgrad (Transmissionsvermögen) des Objektes bestimmt werden. Reflexionsvermögen, Absorptionsvermögen und Transmissionsvermögen sind optische Eigenschaften, die je nach der Wellenlänge einer einfallenden Strahlung (z. B. im Ultraviolett-Bereich, im Bereich des sichtbaren Lichts, im Infrarot-Bereich und im Bereich der Wärmestrahlung) für ein- und dasselbe Material unterschiedliche Werte annehmen können. Hinsichtlich des Absorptionsvermögens ist dabei das Kirchhoffsche Gesetz bekannt, wonach der Absorptionsgrad jeweils bei einer bestimmten Temperatur und Wellenlänge in konstantem Verhältnis zum Emissionsgrad steht. Somit sind für das Absorptionsvermögen auch das Wiensche Verschiebegesetz bzw. das Plancksche Gesetz sowie das Stefan-Boltzmann-Gesetz von Bedeutung, durch die bestimmte Zusammenhänge zwischen Strahlungsintensität, spektraler Verteilungsdichte, Wellenlänge und Temperatur eines sogenannten "Schwarzen Körpers" beschrieben werden. Bei Berechnungen ist zu beachten, dass der "Schwarze Körper" als solcher nicht existiert und reale Stoffe in je charakteristischer Weise von der Idealverteilung abweichen. Zur Gewährleistung einer hocheffektiven Energieausnutzung werden für Absorberteile im solaren Wellenlängenbereich (etwa 300 bis etwa 2500 nm) ein maximaler Absorptionsgrad und im Bereich der Wärmestrahlung (oberhalb etwa 2500 nm) ein maximaler Reflexionsgrad gefordert.

Ein Verbundmaterial der eingangs genannten Art ist aus der EP 1 217 394 B1 bekannt und hat sich in der Praxis - beispielsweise für ein Solarkollektorelement, wie es in der EP 1 217 315 B1 beschrieben ist - bewährt. Das aus dem letztgenannten Dokument bekannte Solarkollektorelement ist dabei insbesondere auf der Basis von beschichtetem Aluminiumband als Träger hergestellt, wobei rückseitig ein lasergeschweißtes Kupferrohr befestigt ist.

Die Zwischenschicht des bekannten Verbundmaterials besteht dabei insbesondere aus anodisch oxidiertem oder elektrolytisch geglänztem und anodisch oxidiertem Aluminium, das aus dem Trägermaterial gebildet ist. Sie kann auf nasschemischen Weg erzeugt werden, wobei die Poren der Aluminiumoxidschicht in der letzten Phase der Prozesskette weitestgehend durch eine Heissverdichtung verschlossen werden können, so dass eine dauerhaft beständige Oberfläche entsteht.

Das optisch wirkende Mehrschichtsystem des bekannten Verbundmaterials besteht aus drei Einzelschichten, wobei die beiden oberen Schichten oxidische Schichten sind und die unterste Schicht eine auf die Zwischenschicht aufgetragene metallische Schicht ist, die die Infrarot-Reflektionsschicht bildet. Die Schichten können dabei vorzugsweise Sputterschichten, insbesondere durch Reaktivsputtern erzeugte Schichten, CVD- oder PECVD-Schichten oder durch Verdampfen, insbesondere durch Elektronenbombardement oder aus thermischen Quellen, erzeugte Schichten sein und vorteilhafterweise in Vakuumfolge in einem kontinuierlichen Verfahren erzeugt werden.

Im Einzelnen ist die oberste Schicht des Mehrschichtsystems des bekannten Verbundmaterials insbesondere eine siliciumoxidische Schicht der chemischen Zusammensetzung SiOy. Die mittlere Schicht ist eine chromoxidische Schicht der chemischen Zusammensetzung CrOₓ und die unterste Schicht besteht aus Gold, Silber, Kupfer, Chrom, Aluminium und/oder Molybdän, wobei es auch möglich ist, dass sie aus mehreren übereinander angeordneten Teilschichten besteht. Die mittlere Schicht bildet das Absorptions-Schichtsystem und weist eine hohe Selektivität des Absorptionsgrades (Spitzenwerte über 90 % im Wellenlängenbereich von etwa 300 bis 2500 nm, Minimalwerte unter 15 % im Wellenlängenbereich > ca. 2500 nm) auf.

Ein Nachteil des bekannten Verbundmaterials ist jedoch die nicht immer ausreichende Witterungsbeständigkeit, insbesondere in maritimen Klimaten.

Der vorliegenden Erfindung liegt die Aufgabe zugrunde, ein Verbundmaterial der eingangs beschriebenen Art, insbesondere zur Verwendung in einem Solarkollektorelement, zu schaffen, das bei hoher Funktionalität, die sich insbesondere in den oben genannten Werten des solaren Absorptionsgrades, des thermischen Emissionsgrades und einer hohen Temperaturstabilität ausdrückt, und bei möglichst aufwandsarmer Herstellbarkeit und langer Lebensdauer sowie des Weiteren einer einfachen Recyclierbarkeit - insbesondere in maritimen Klimaten - eine verbesserte Witterungsbeständigkeit aufweist.

Erfindungsgemäß wird dies dadurch erreicht, dass die Zwischenschicht zur elektrochemisch isolierenden Trennung des Trägers von dem optischen Mehrschichtsystem ohne durchgängige Poren ausgebildet ist und mindestens eine aus einem Kunststoff bestehende Teilschicht umfasst, wobei eine im Frequenzbereich von 1 bis 10 Hz an dem Verbund aus Träger und Schichten gemessene Impedanz einen Wert besitzt, der größer ist als 1 MΩ.

Die Erfindung beruht auf der Erkenntnis, dass die, insbesondere in maritimen Klimaten, zu verbessernde Witterungsbeständigkeit des bekannten Materials auf elektrochemischen Prozessen beruht, die durch Interaktionen der Konstituenten des Materials hervorgerufen werden. So konnte durch Versuche festgestellt werden, dass eine Hauptursache für die nicht ausreichende Beständigkeit in maritimen Klimaten eine Korrosion an der selektiv beschichteten Oberfläche des bekannten Verbundmaterials ist. Die rein metallischen Schichtbestandteile und das andere Material des Bandsubstrates treten bei Anwesenheit von Feuchte aufgrund der prozessbedingten Porosität der beteiligten Schichten in elektrochemische Wechselwirkung, in deren Ergebnis dann eine flächenhafte Korrosion auftritt. Diese kann durch die Erfindung nahezu vollständig unterbunden werden.

Erfindungsgemäß wird verhindert, dass in den Schichten bzw. Schichtsystemen des erfindungsgemäßen Verbundmaterials, die zum Teil metallische Schichten - wie optional Gradientenschichten mit bei zunehmender Schichtdicke abnehmender Konzentration der Hauptkonstituenten - durch das Eintreten von Feuchtigkeit elektrochemische Prozesse einsetzen. Diese bei Anwesenheit von Elektrolyten, wie Wasser oder Salzlösung, auftretenden elektrochemischen Prozesse laufen um so schneller ab, je größer der Abstand der elektrochemischen Potentiale der beteiligten Metalle ist. Dies erklärt, warum im Korrosionstest bei dem bekannten Verbundmaterial eine Chromschicht auf Aluminium als Material des Trägers deutlich schlechter abschneidet, als eine solche Schicht auf Kupfer.

Des Weiteren liegt der Erfindung die Erkenntnis zugrunde, dass dann, wenn durch die Teilschicht der Zwischenschicht in den vorhandenen Schichten bzw. Schichtsystemen - einschließlich des Trägers - eine Impedanz eingestellt wird, die im Frequenzbereich von 1 bis 10 Hz größer ist als 1 MΩ, dem erfindungsgemäßen Verbundmaterial eine erhöhte Beständigkeit in maritimen Klimaten verliehen werden kann.

Diese angestrebte erhöhte Beständigkeit drückt sich beispielsweise darin aus, dass, wenn die zu testende Fläche eine Woche lang einer wässrigen Kochsalzlösung von 1-normaler Konzentration bei 40 °C ausgesetzt wird, bei einem bekannten Standardmaterial bereits nach 24 Stunden erste Punktkorrosionserscheinungen beobachtet werden können, während an dem erfindungsgemäßen Material selbst nach einer Woche Belastung keine solche Punktkorrosionserscheinungen feststellbar sind.

Die Ermittlung der Impedanz wird dabei durch die sogenannte Impedanz-Spektroskopie vorgenommen. Der Verlauf der Impedanz, die über einen Frequenzbereich von etwa 1 Hz bis 10 Hz, optional bis zu etwa 100 kHz erfolgen kann, liefert, insbesondere mit dem dazugehörigen Phasendiagramm, sehr schnell eine Aussage, ob ein Verbundmaterial den Anforderungen genügen wird oder nicht. Ergänzend lässt sich auf diese Weise sehr schnell prüfen, ob eine applizierte Kunststoff-Teilschicht nach einer zum Zwecke der bevorzugten Aufbringung der Infrarot-Reflektionsschicht und des darüber liegenden Absorptions-Schichtsystems vorgenommenen Vakuumbehandlung das Verbundmaterial bezüglich seines späteren Korrosionsverhaltens verbessert oder verschlechtert hat.

Weitere vorteilhafte Ausführungen der Erfindung sind in den Unteransprüchen und in der nachfolgenden detaillierten Beschreibung enthalten.

Anhand eines durch die beiliegende Zeichnung veranschaulichten Ausführungsbeispiels wird die Erfindung näher erläutert. Dabei zeigen:
- Fig. 1: eine prinzipielle Schnittdarstellung durch ein erfindungsgemäßes Verbundmaterial,
- Fig. 2: den Frequenzgang der durch Impedanz-Spektroskopie ermittelten Impedanz eines erfindungsgemäßen Verbundmaterials im Vergleich mit einem Standardmaterial.

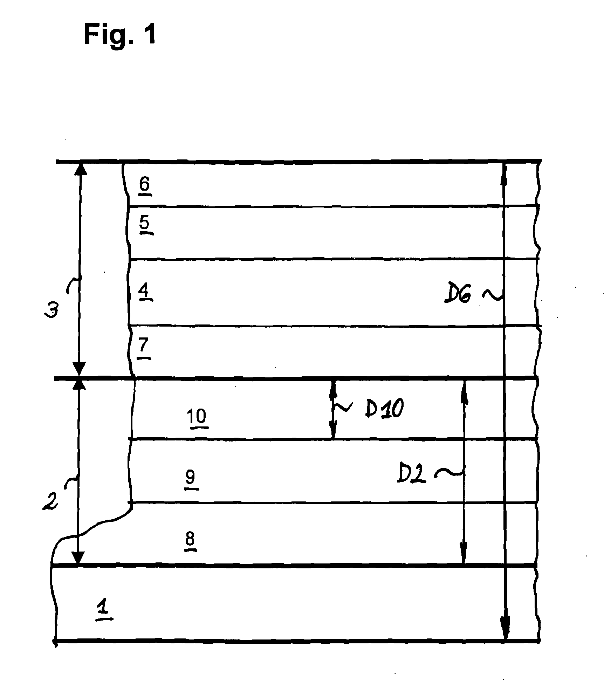

Wie Fig. 1 zeigt, umfasst ein erfindungsgemäßes Verbundmaterial, das insbesondere zur Herstellung eines Solarkollektorelementes einsetzbar ist, einen bandförmigen metallischen Träger 1, eine Zwischenschicht 2 und ein auf die Zwischenschicht 2 aufgebrachtes optisches Mehrschichtsystem 3. Das optische Mehrschichtsystem 3 weist eine metallische Infrarot-Reflektionsschicht 4 und ein darüber liegendes Absorptions-Schichtsystem 5 auf.

Alle Schichten des optischen Mehrschichtsystems 3 können bevorzugt Sputterschichten, insbesondere durch Reaktivsputtern erzeugte Schichten, CVD- oder PECVD-Schichten oder durch Verdampfen, insbesondere durch Elektronenbombardement oder aus thermischen Quellen, erzeugte Schichten sein und bevorzugt in Vakuumfolge in einem kontinuierlichen Verfahren erzeugt werden.

Als optional vorhandene oberste Schicht des erfindungsgemäßen Verbundmaterials ist in Fig. 1 in dem optischen Mehrschichtsystem 3 ein bevorzugt aus dielektrischen Teilschichten bestehendes Entspiegelungs-Schichtsystem 6 dargestellt, das dazu dient, die Restreflektion im solaren Bereich zu minimieren. Der sich dadurch ergebende, aus drei Hauptschichten bestehende Aufbau des optischen Mehrschichtsystems 3 entspricht somit den eingangs dargestellten, an sich bekannten Verhältnissen. Auch weitere an sich bekannte Merkmale - wie die entsprechenden Dicken bzw. Zusammensetzungen der Schichten 4, 5, 6 - können in dem erfindungsgemäßen Material vorliegen, wobei das solare Absorptions-Schichtsystem 5 bevorzugt für eine hohe Absorption über dem normierten AM 1,5 Spektrum ausgelegt sein kann.

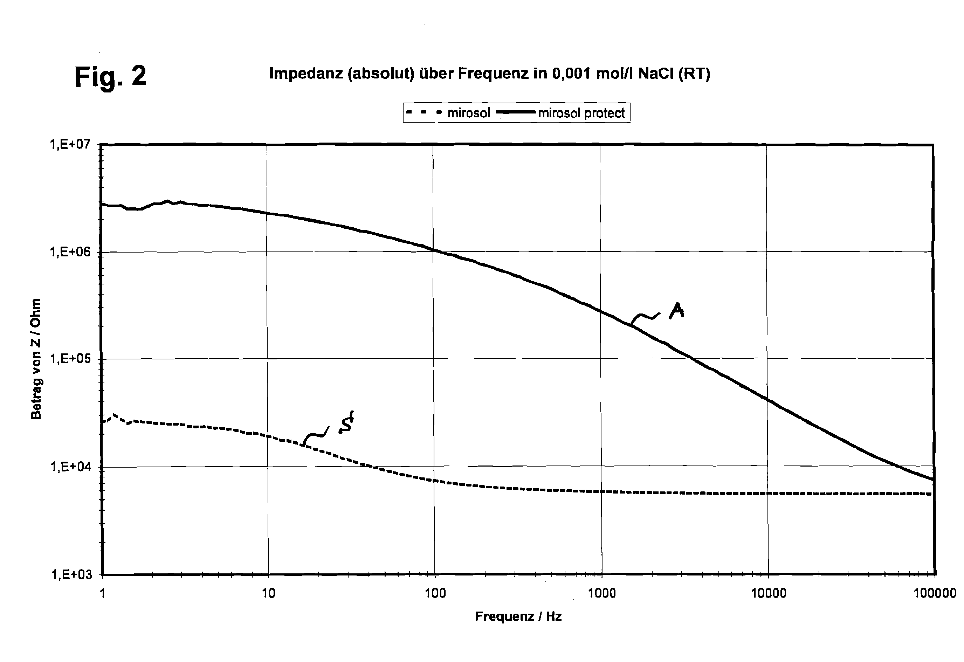

Erfindungsgemäß ist vorgesehen, dass die Zwischenschicht 2 zur elektrochemisch isolierenden Trennung des Trägers 1 von dem optischen Mehrschichtsystem 3 porenfrei ausgebildet ist und mindestens eine aus einem Kunststoff bestehende Teilschicht 9 umfasst, wobei eine im Frequenzbereich von 1 bis 10 Hz an dem Verbund aus Träger 1 und Schichten 2, 3 gemessene Impedanz einen Wert besitzt, der größer ist als 1 MΩ. Wie bereits erwähnt, ist ein Frequenzgang der durch Impedanz-Spektroskopie ermittelten Impedanz in Fig. 2 gezeigt.

Durch die erfindungsgemäß ausgebildete Zwischenschicht 2 ist es möglich, eine elektrochemische Wechselwirkung zwischen dem Metall des Bandes 1 und den metallischen Bestandteilen des Schichtsystems 3 derart zu unterbinden, dass ohne Beeinträchtigung der wichtigen funktionellen Eigenschaften des erfindungsgemäßen Verbundmaterials, wie des solaren Absorptionsgrades, des thermischen Emissionsgrades, der Temperaturstabilität, der Verarbeitbarkeit und der Recyclierbarkeit, ein im Vergleich zu einem Standardmaterial, wie es eingangs beschrieben ist, signifikanter Anstieg der Witterungsbeständigkeit eintritt. Die Zwischenschicht wirkt damit als eine elektrochemische Barriereschicht zwischen Träger 1 und optischem Mehrschichtsystem 3.

So werden, wie bereits ausgeführt, wenn eine Probe des erfindungsgemäßen Verbundmaterials eine Woche lang einer wässrigen 1-n-Kochsalzlösung bei 40 °C ausgesetzt wird, keine Punktkorrosionserscheinungen festgestellt.

Der Kunststoff der mindestens einen Teilschicht 9 der Zwischenschicht 2 kann insbesondere auf der Basis einer lösemittelhaltigen Zusammensetzung hergestellt sein, die als Hauptbestandteil ein Acrylat-, Epoxyd- oder Polyurethanharz oder eine Mischung aus diesen Stoffen enthält. Hierbei kann insbesondere vorgesehen sein, dass der Kunststoff der mindestens einen Teilschicht 9 der Zwischenschicht 2 - durch Kombination eines Acrylat-, Epoxyd- oder Polyurethanharzes oder einer Mischung aus diesen Stoffen mit Phenolen - aus Acrylatphenol, Epoxiphenol oder Polyurethanphenol oder deren Mischungen besteht.

Der bandförmige metallische Träger 1 kann bevorzugt aus Aluminium oder Kupfer, aber auch aus Edelstahl bestehen. Die Rückseite des Metallbandes kann bevorzugt unbehandelt bleiben.

Wie in Fig. 1 dargestellt, kann die Zwischenschicht 2 bevorzugt aus der mindestens einen Teilschicht 9 sowie aus weiteren Teilschichten 8, 10 bestehen. Die Teilschichten 8, 9, 10 der Zwischenschicht 2 können dabei voneinander abweichende chemische Zusammensetzungen aufweisen.

Die Teilschichten 8, 9, 10 der Zwischenschicht 2 können dabei auch in mehreren Verfahrensschritten auf den bandförmigen metallischen Träger 1 aufgebracht sein.

So ist es möglich, dass die zur Auftragung einer untersten Teilschicht 8 der Zwischenschicht 2 vorgesehenen Verfahrensschritte eine anodische Oxydation oder ein elektrolytisches Glänzen kombiniert mit einer anodischen Oxydation eines/des aus Aluminium bestehenden Trägers 1 umfassen. Es liegt damit eine Teilschicht 8 vor, wie diese als Gesamtschicht - wie eingangs beschrieben - an sich auf einem Trägermaterial bekannt ist.

Des Weiteren ist es möglich, dass die zur Auftragung einer obersten Teilschicht 10 der Zwischenschicht vorgesehenen Verfahrensschritte die nasschemische Auftragung einer in einem Sol-Gel-Prozess gewonnenen, vorwiegend anorganischen SiO₂-haltigen Schicht umfassen. So ist aus der EP 1 154 289 A1, auf die hier in vollem Umfang verwiesen wird, die Herstellung einer glasartigen Sol-Gel-Schutzschicht bekannt, die im Wesentlichen aus einem Netzwerk anorganischer Polysiloxane mit organischen Gruppen besteht. In mehreren Lagen und/oder einlagig in hinreichender Dicke aufgebracht, sind diese Schichten nahezu porenfrei und isolierend. Besonders vorteilhaft ist dabei die geringe Durchlässigkeit für Wasser. Durch diese bevorzugte Ausbildung der Zwischenschicht 2 wird - wie durch die aus Kunststoff bestehende Teilschicht 9 - eine elektrische Isolierung des Trägers 1 von dem optischen Mehrschichtsystem 3 erreicht, da die glasartige Teilschicht 10 wie die meisten Gläser und die meisten Kunststoffe, ein guter Isolator ist.

Um die erfindungsgemäß beabsichtigte Wirkung zu erzielen, ist es insbesondere mit dem Vorteil einer leichten Verarbeitbarkeit und Verfügbarkeit der Ausgangsstoffe möglich, für die mindestens eine aus einem Kunststoff bestehende Teilschicht 9 aus der Elektrotechnik bekannte, bevorzugt aus Epoxiphenolen bestehende, Drahtlacke einzusetzen, die die angestrebte Isolierfunktion erfüllen können.

Seit vielen Jahren beliefert die Coil-Coating-Industrie z. B. Caravan-Hersteller mit lackiertem Aluminium für Dächer von Wohnmobilen, Wohnwagen usw.. Auch die dort verwendeten Lacke und Verfahren sind erfindungsgemäß zur Herstellung der mindestens einen Teilschicht 9 der Zwischenschicht 2 einsetzbar. Wenn der Lack keine Löcher und Poren aufweist, ist eine elektrochemische Trennung zwischen dem metallischen Träger 1 und dem optischen Mehrschichtsystem 3 erzielbar. Es hat sich dabei gezeigt, dass ein und dieselbe dielektrische Beschichtung des optischen Mehrschichtsystems 3 auf einem solchen Lackuntergrund deutlich weniger Korrosion zeigt als auf einem nur band-eloxiertem Aluminium. Darüber hinaus weisen Standard-Coil-Coating-Lacke eine gute Verformbarkeit auf und es ist auch eine Temperaturbeständigkeit bis zu 200 °C für kurze Zeit gegeben.

Für das erfindungsgemäße Verbundmaterial kann so eine charakteristische Ausbildung als Coil mit einer Breite von bis zu 1650 mm, vorzugsweise mit einer Breite bis zu 1400 mm, eingestellt werden. Eine Materialdicke DG kann dabei vorzugsweise im Bereich von 0,1 mm bis 0,8 mm liegen.

Da sich die korrosionsschützenden Eigenschaften der genannten Lacke aber verändern, wenn das lackierte Band-Material zur bevorzugten Herstellung des optischen Mehrschichtsystems vakuumbehandelt, z. B. PVD-beschichtet wird, ist zu fordern, dass die Einbußen korrosionsschützender Eigenschaften durch den PVD-Beschichtungsprozess minimal sind. Dies kann - wie bereits erwähnt - durch Einsatz der Impedanzspektroskopie kontrolliert und die entsprechende Lackauswahl gesteuert werden.

Unter diesen Voraussetzungen besteht vorteilhafterweise hinsichtlich der Rezepturen für einen für die nachfolgende Vakuum-Beschichtung geeigneten Coil-Coating-Lack eine große Auswahl. So ist z. B. von Acrylaten bekannt, dass sie einen sehr ebenen Verlauf haben. Andererseits ist unter Umständen die Temperaturbeständigkeit eines Epoxydharzes besser, als die eines Acrylates und für bestimmte Anwendungen kann es auch hilfreich sein, eine Polyurethanrezeptur einzusetzen. Die meisten dieser Rezepturen können zur Vergrößerung des Festkörperanteils auch mit Beimengungen aus Polyamid oder Polyimid verändert werden. Im Allgemeinen führen diese Beimengungen dazu, dass die Oberfläche leicht rauh strukturiert erscheint. Die PVD-Fähigkeit wird jedoch dadurch nicht negativ beeinflusst.

Unter den in Frage kommenden Coil-Coating-Rezepturen lassen sich somit einige selektieren, die besonders geeignet erscheinen. Dazu gehören u. a. Epoxyphenole und auch Polyurethane mit oder ohne Beimengungen von Polyamid. Versuche haben dabei gezeigt, dass Lackdicken bis ca. 20 µm durchaus geeignet sind, eine hervorragende Witterungsbeständigkeit im erfindungsgemäßen Verbundmaterial zu garantieren. Das gilt speziell für das Lackieren von Kupfer- und Aluminiumbändern. Selbstverständlich besteht keinerlei grundsätzliche Einschränkung, irgendein anderes Metallband als Träger 1 für eine solche korrosionsgeschützte selektive solarabsorbierende Vakuum-Beschichtung 3 einzusetzen. Im Allgemeinen wird man sich aber auf Metallbänder konzentrieren, weil diese die bessere Wärmeleitfähigkeit besitzen.

Beim Einsatz von Lack in der Zwischenschicht 2 können, was die bereits erwähnten möglichen Verfahrensschritte zur Auftragung der Teilschichten 8, 9, 10 betrifft, Lackauftragungen und gegebenenfalls dazugehörige -einbrennvorgänge vorgesehen sein. Der Korrosionsschutzeffekt einer Coil-Coating-Lackierung kann dabei insbesondere dadurch gesteigert werden, dass eine bestimmte Lackdicke in zwei oder mehr Durchgängen aufgetragen wird. So erreicht man, dass es keine durchgängigen Porenbildungen von der Lackoberfläche bis zur Substratgrenze am Träger 1 gibt. Das Vermeiden der Ausbildung von Poren beeinflusst den Korrosionsschutz positiv, wie auch zu fordern ist, dass die Wasserdurchlässigkeit des Lackes möglichst gering ist, damit sich keine elektrochemischen Brücken oder Kanäle zwischen den in dem Verbundmaterial enthaltenen Metallen ausbilden können. Es ist dabei klar, dass mit einer größeren Lackgesamtdicke ein besserer Schutz erreicht werden kann. Andererseits impliziert die höhere Lackdicke auch größere Kosten, so dass für jede Rezeptur ein entsprechendes Optimum gesucht werden sollte.

Um einem eventuell möglichen kritischen Verhalten des erfindungsgemäßen Verbundmaterials vorzubeugen, das dadurch auftreten kann, dass die metallische IR-Reflexionsschicht 4 direkt an die Zwischenschicht 2 grenzt und das sich darin äußern kann, dass bei höheren Betriebstemperauren über 200 °C, wie sie in Solarkollektoren im Stillstand auftreten können, die Gefahr von Rissbildung wegen der unterschiedlichen thermischen Ausdehnungen von Zwischenschichtmaterial 2 und IR-Reflexionsschicht 4 besteht, kann mit Vorteil optional vorgesehen sein, dass auf der Zwischenschicht 2 unter der Infrarot-Reflexionsschicht 4 eine Haftvermittlerschicht 7 angeordnet ist.

Grundsätzlich zeigt sich dabei im Verfahren des Coil-Coating-Prozesses, dass eine solche Vorbehandlung des Bandmaterials des Trägers 1, z. B. mit einem Primer, die Witterungsbeständigkeit stark positiv beeinflussen kann. Die unter Einsatz geeigneter Primer und angepasster Vorbehandlung hergestellte Haftvermittlerschicht 7 ist daher auch eine weitere technische Maßnahme zur angestrebten Erhöhung des Korrosionsschutzes.

Die Haftvermittlerschicht 7 kann - wie die anderen Schichten 4, 5, 6 des optischen Mehrschichtsystems 3 - auch durch Reaktivsputtern, CVD- oder PECVD-Prozesse usw. in einem kontinuierlichen Verfahren im Vakuum erzeugt werden, was dazu dient, den bekanntermaßen bevorzugt unter Verwendung von Standardsubstraten aus Metallband ablaufenden Vakuum-Beschichtungsprozess an die erfindungsgemäße Ausbildung der Zwischenschicht 2 anzupassen. Während die übliche Vorbehandlung von Kupfer oder Aluminium so beherrscht wird, dass die abzuscheidenden Schichten haftfest anlagern, kann es bei organischen Untergründen, wie Lacken, zu Haftungsproblemen kommen, was durch die Präsenz der Haftvermittlerschicht 7 vermieden wird. Die Haftvermittlerschicht 7 erfüllt somit die Aufgabe, eine hohe Verbindungsfestigkeit zwischen der obersten Teilschicht 10 der Zwischenschicht 2 und der untersten, im Allgemeinen der IR-reflektierenden, Schicht 4 des optischen Mehrschichtsystems 3 herzustellen.

Wegen der in einem Solarkollektorelement später zu erwartenden Beanspruchung des erfindungsgemäßen Verbundmaterials, beispielsweise bei Stillstandstemperaturen von ca. 200 °C, muss geprüft werden, inwieweit das optische Mehrschichtsystem 3 und die Zwischenschicht 2 miteinander kompatibel sind. Dies geschieht im Allgemeinen durch einen Temperaturbelastungs- und/oder auch einen Temperaturschocktest. Ein erfindungsgemäßes Verbundmaterial zeigt in einem solchen Test keine visuell erkennbaren Risse in der Oberfläche - auch nicht nach mehrfachen Temperaturwechseln von 200 °C zur Raumtemperatur.

Eine weitere wichtige Bedingung, die in einem erfindungsgemäßen Verbundmaterial bevorzugt erfüllt sein sollte und der eine eigenständige erfinderische Bedeutung zugemessen wird, ist, dass der Hauptbestandteil der metallischen Infrarot-Reflexionsschicht 4 auch der metallische Hauptbestandteil der Absorptionsschicht 5 ist. So kann gewährleistet werden, dass kein zusätzliches elektrochemisches Potential in das Vakuum-Schichtsystem eingebaut wird. Die Gesamtheit der im Verbundmaterial vorhandenen aufgebrachten Schichten bzw. Schichtsysteme ist somit vorteilhafterweise in ihrer chemischen Zusammensetzung derart gestaltet, dass die Schichten in sich selbst und gegeneinander eine hohe chemische Trägheit aufweisen. Gegenteiligenfalls würde sich nach der Hestellung des optischen Mehrschichtsystems 3 zeigen, dass der Einbau eines bestimmten Metalls in die IR-Reflexionsschicht 4 in ungünstigen Fällen zu einer deutlichen Beeinträchtigung der Witterungsbeständigkeit führen kann, was sich im Elektrolyten auch durch die Impedanz-Spektroskopie zeigen läßt.

Fig. 2 verdeutlicht die Erfindung anhand des Frequenzgangs der durch Impedanz-Spektroskopie ermittelten Impedanz eines erfindungsgemäßen Verbundmaterials (Kurve A, "mirosol protect") im Vergleich mit einem Standardmaterial (Kurve S, "mirosol"), das durch ein Verbundmaterial der eingangs genannten Art gebildet wird. Im Frequenzbereich von 1 bis 10 Hz, vorzugsweise im Bereich von 1 bis 100 Hz, ist die an dem Verbund aus Träger 1 und Schichten 2, 3 gemessene Impedanz immer größer als 1 MΩ und liegt damit um etwa zwei Zehnerpotenzen höher als die Impedanz des bekannten Verbundmaterials. Die Kurve A zeigt dabei im Messbereich der Frequenz von 50 Hz bis 100 kHz einen stetig abnehmenden Verlauf bis auf einen Endwert von etwa 80 kΩ. Die Messungen erfolgten dabei jeweils in 0,001 molarer Kochsalzlösung bei Raumtemperatur.

Zur Realisierung der Impedanz-Spektroskopie wurde ein Gerät Parstat 2273 von Princeton Applied Research eingesetzt, das als kombinierter Potentiostat/Galvanostat auch für potentiodynamische Messungen, die ebenfalls zur Charakterisierung des erfindungsgemäßen Materials herangezogen werden können, Anwendung findet. Das Gerät gestattet es, für eingesetzte Materialproben Strom-Spannungskennlinien und damit auch Widerstandskennlinien aufzunehmen, die gegenüber einer Referenzelektrode, der sogenannten Haber-Luggin-Kapillare, in einer NaCl-Lösung vorgegebener Konzentration ermittelt werden.

Die vorliegende Erfindung ist nicht auf das dargestellte Ausführungsbeispiel beschränkt, sondern umfasst alle im Sinne der Erfindung gleichwirkenden Mittel und Maßnahmen. So ist es beispielsweise auch möglich, das optische Mehrschichtsystem 3 entsprechend den eingangs genannten Dokumenten EP 1 217 394 B1 und EP 1 217 315 B1 auszubilden, ohne dass der Rahmen der Erfindung verlassen wird.

Ferner ist die Erfindung nicht auf die in den Ansprüchen 1 und 13 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal der unabhängigen Ansprüche weggelassen bzw. durch mindestens ein an anderer Stelle der Anmeldung offenbartes Einzelmerkmal ersetzt werden kann. Insofern sind die Ansprüche lediglich als ein erster Formulierungsversuch für eine Erfindung zu verstehen.

### Bezugszeichen

- 1: Träger
- 2: Zwischenschicht
- 3: optisches Mehrschichtsystem
- 4: Infrarot-Reflektionsschicht von 3
- 5: Absorptions-Schichtsystem von 3
- 6: Entspiegelungs-Schichtsystem von 3
- 7: Haftvermittlerschicht
- 8: unterste Teilschicht von 2
- 9: mittlere Teilschicht von 2
- 10: oberste Teilschicht von 2
- A: Impedanzkurve, erfindungsgemäß
- DG: (Gesamt-)Dicke
- D2: Dicke von 2
- D10: Dicke von 10
- S: Impedanzkurve, Standardprobe

## Patentansprüche

1. Verbundmaterial, insbesondere für ein Solarkollektorelement, mit einem bandförmigen metallischen Träger (1), einer Zwischenschicht (2) und mit einem auf die Zwischenschicht (2) aufgebrachten optischen Mehrschichtsystem (3), welches eine metallische Infrarot-Reflektionsschicht (4) und ein darüber liegendes Absorptions-Schichtsystem (5) umfasst,
**dadurch gekennzeichnet, dass** die Zwischenschicht (2) zur elektrochemisch isolierenden Trennung des Trägers (1) von dem optischen Mehrschichtsystem (3) ohne durchgängige Poren ausgebildet ist und mindestens eine aus einem Kunststoff bestehende Teilschicht (9) umfasst, wobei eine im Frequenzbereich von 1 bis 10 Hz an dem Verbund aus Träger (1) und Schichten (2, 3) gemessene Impedanz einen Wert besitzt, der größer ist als 1 MΩ.

2. Verbundmaterial nach Anspruch 1,
**dadurch gekennzeichnet, dass** der Kunststoff der mindestens einen Teilschicht (9) der Zwischenschicht (2) auf der Basis einer lösemittelhaltigen Zusammensetzung hergestellt ist, die als Hauptbestandteil ein Acrylat-, Epoxyd- oder Polyurethanharz oder eine Mischung aus diesen Stoffen enthält.

3. Verbundmaterial nach Anspruch 1 oder 2,
**dadurch gekennzeichnet, dass** der Kunststoff der mindestens einen Teilschicht (9) der Zwischenschicht (2) durch Kombination eines Acrylat-, Epoxid- oder Polyurethanharzes oder einer Mischung aus diesen Stoffen mit Phenolen aus Acrylatphenol, Epoxiphenol oder Polyurethanphenol oder deren Mischungen besteht.

4. Verbundmaterial nach einem der Ansprüche 1 bis 3,
**dadurch gekennzeichnet, dass** der bandförmige metallische Träger (1) aus Kupfer, Edelstahl oder aus Aluminium besteht.

5. Verbundmaterial nach einem der Ansprüche 1 bis 4,
**dadurch gekennzeichnet, dass** die Zwischenschicht (2) aus der mindestens einen Teilschicht (9) sowie aus weiteren Teilschichten (8, 10) besteht.

6. Verbundmaterial nach Anspruch 5,
**dadurch gekennzeichnet, dass** die Teilschichten (8, 9, 10) der Zwischenschicht (2) voneinander abweichende chemische Zusammensetzungen aufweisen.

7. Verbundmaterial nach Anspruch 5 oder 6,
**dadurch gekennzeichnet, dass** die Teilschichten (8, 9, 10) der Zwischenschicht (2) in mehreren Verfahrensschritten auf den bandförmigen metallischen Träger (1) aufgebracht sind.

8. Verbundmaterial nach Anspruch 7,
**dadurch gekennzeichnet , dass** die zur Auftragung der Teilschichten (8, 9, 10) der Zwischenschicht (2) vorgesehenen Verfahrensschritte Lackauftragungen und gegebenenfalls dazugehörige -einbrennvorgänge umfassen.

9. Verbundmaterial nach Anspruch 7 oder 8,
**dadurch gekennzeichnet , dass** die zur Auftragung einer untersten Teilschicht (8) der Zwischenschicht (2) vorgesehenen Verfahrensschritte eine anodische Oxydation oder ein elektrolytisches Glänzen kombiniert mit einer anodischen Oxydation eines/des aus Aluminium bestehenden Trägers (1) umfassen.

10. Verbundmaterial nach einem der Ansprüche 7 bis 9,
**dadurch gekennzeichnet, dass** die zur Auftragung einer obersten Teilschicht (10) der Zwischenschicht (2) vorgesehenen Verfahrensschritte die nasschemische Auftragung einer in einem Sol-Gel-Prozess gewonnenen, vorwiegend anorganischen Schicht mit einem Gehalt an SiO₂ umfassen.

11. Verbundmaterial nach einem der Ansprüche 5 bis 10, insbesondere nach Anspruch 10,
**dadurch gekennzeichnet , dass** eine/die oberste Teilschicht (10) der Zwischenschicht (2) eine Dicke (D10), insbesondere eine nach einem Aushärten vorliegende Trockendicke, im Bereich von 0,5 µm bis 3 µm aufweist.

12. Verbundmaterial nach einem der Ansprüche 1 bis 11,
**dadurch gekennzeichnet, dass** die Zwischenschicht (2) eine Gesamtdicke (D2), insbesondere eine geometrische Trockendicke, im Bereich von etwa 1 µm bis 80 µm aufweist.

13. Verbundmaterial nach dem Oberbegriff des Anspruchs 1, insbesondere nach einem der Ansprüche 1 bis 12,
**dadurch gekennzeichnet , dass** die metallische Infrarot-Reflektionsschicht (4) aus demselben Metall besteht, welches den metallischen Hauptbestandteil im darüber angeordneten Absorptionsschichtsystem (5) bildet.

14. Verbundmaterial nach einem der Ansprüche 1 bis 13,
**dadurch gekennzeichnet, dass** auf der Zwischenschicht (2) unter der Infrarot-Reflexionsschicht (4) eine Haftvermittlerschicht (7) angeordnet ist.

15. Verbundmaterial nach einem der Ansprüche 1 bis 14,
**dadurch gekennzeichnet, dass** die Schichten (4, 5, 6) des optischen Mehrschichtsystems (3) sowie gegebenenfalls die Haftvermittlerschicht (7) Sputterschichten, insbesondere durch Reaktivsputtern erzeugte Schichten, CVD- oder PECVD-Schichten oder durch Verdampfen, insbesondere durch Elektronenbombardement oder aus thermischen Quellen, erzeugte Schichten sind und bevorzugt in Vakuumfolge in einem kontinuierlichen Verfahren erzeugt werden.

16. Verbundmaterial nach einem der Ansprüche 1 bis 15,
**gekennzeichnet durch** eine Ausbildung als Coil mit einer Breite von bis zu 1650 mm, vorzugsweise mit einer Breite bis zu 1400 mm.

17. Verbundmaterial nach einem der Ansprüche 1 bis 16,
**gekennzeichnet durch** eine Materialdicke (DG) im Bereich von 0,1 mm bis 0,8 mm.

18. Verbundmaterial nach einem der Ansprüche 1 bis 17,
**dadurch gekennzeichnet, dass** das optische Mehrschichtsystem (3) als oberste Schicht ein Entspiegelungs-Schichtsystem (6) umfasst, das eine Restreflektion im solaren Spektralbereich der einfallenden Strahlung minimiert.
